# EUROPEAN PATENT APPLICATION

(11) **EP 2 226 649 A1**
(43) Date of publication of application: **08.09.2010**
(21) Application number: 10155124.0
(22) Date of filing: 02.03.2010
(51) Int. Cl.: G01V 1/20

(54) **System and Method for Using Magnets for Protecting Towed Marine Seismic Equipment from Shark Bite**

(30) Priority: 06.03.2009 US 209468 P; 19.10.2009 US 589150
(71) Applicant: PGS Geophysical AS, 1366 Lysaker (NO)
(72) Inventor: Borresen, Claes Nicolai, Houston TX 77450 (US); Lunde, Nils, Houston TX 77077 (US)
(74) Representative: Skone James, Robert Edmund

(57) **Abstract**

A system comprises marine seismic equipment (10) adapted for towing through a body of water and at least one magnet (20) attached to the marine seismic equipment. A method comprises towing marine seismic equipment having at least one magnet attached thereto.

## Description

### 1. Field of the Invention

This invention relates generally to the field of geophysical prospecting. More particularly, the invention relates to the field of marine seismic surveys with towed seismic equipment.

### 2. Description of the Related Art

In the oil and gas industry, geophysical prospecting is commonly used to aid in the search for and evaluation of subterranean formations. Geophysical prospecting techniques yield knowledge of the subsurface structure of the earth, which is useful for finding and extracting valuable mineral resources, particularly hydrocarbon deposits such as oil and natural gas. A well-known technique of geophysical prospecting is a seismic survey.

The resulting seismic data obtained in performing a seismic survey is processed to yield information relating to the geologic structure and properties of the subterranean formations in the area being surveyed. The processed seismic data is processed for display and analysis of potential hydrocarbon content of these subterranean formations. The goal of seismic data processing is to extract from the seismic data as much information as possible regarding the subterranean formations in order to adequately image the geologic subsurface. In order to identify locations in the Earth's subsurface where there is a probability for finding petroleum accumulations, large sums of money are expended in gathering, processing, and interpreting seismic data. The process of constructing the reflector surfaces defining the subterranean earth layers of interest from the recorded seismic data provides an image of the earth in depth or time. The image of the structure of the Earth's subsurface is produced in order to enable an interpreter to select locations with the greatest probability of having petroleum accumulations.

In a marine seismic survey, seismic energy sources are used to generate a seismic signal which, after propagating into the earth, is at least partially reflected by subsurface seismic reflectors. Such seismic reflectors typically are interfaces between subterranean formations having different elastic properties, specifically sound wave velocity and rock density, which lead to differences in acoustic impedance at the interfaces. The reflected seismic energy is detected by seismic sensors (also called seismic receivers) and recorded.

The appropriate seismic sources for generating the seismic signal in marine seismic surveys typically include a submerged seismic source towed by a ship and periodically activated to generate an acoustic wavefield. The seismic source generating the wavefield is typically an air gun or a spatially-distributed array of air guns.

The appropriate types of seismic sensors typically include particle velocity sensors (known in the art as geophones) and water pressure sensors (known in the art as hydrophones) mounted within a towed seismic streamer (also know as a seismic cable). Seismic sensors may be deployed by themselves, but are more commonly deployed in sensor arrays within the streamer.

Seismic sources, seismic streamers, and other attached equipment are towed behind survey vessels, attached by cables. The seismic sources and seismic streamers may be positioned in the water by attached equipment, such as deflectors and cable positioning devices (also known as "birds").

The class Chondrichthyes (fish with cartilaginous skeletons) comprises sharks, rays, skates, and Chimaera (ghost) sharks, with the subclass Elasmobranches comprising sharks, rays, and skates. Some of these sharks occasionally attack and bite the towed marine seismic equipment used in marine seismic surveys employing towed seismic streamers.

A need exists for a system and a method for protecting towed seismic equipment in marine seismic surveys, especially towed marine seismic streamers, from bites by sharks or other elasmobranches.

### BRIEF SUMMARY OF THE INVENTION

The invention is a system and a method for protecting towed marine seismic equipment from shark bite. In one embodiment, the invention is a system comprising marine seismic equipment adapted for towing through a body of water and at least one magnet attached to the marine seismic equipment. In another embodiment, the invention is a method comprising towing marine seismic equipment having at least one magnet attached thereto.

### BRIEF DESCRIPTION OF THE DRAWINGS

The invention and its advantages may be more easily understood by reference to the following detailed description and the attached drawings, in which:

FIG. 1 is a schematic plan view of marine seismic survey equipment with towed seismic streamers; and

FIG. 2 is a schematic side view of a towed seismic streamer.

While the invention will be described in connection with its preferred embodiments, it will be understood that the invention is not limited to these. On the contrary, the invention is intended to cover all alternatives, modifications, and equivalents that may be included within the scope of the invention, as defined by the appended claims.

### DETAILED DESCRIPTION OF THE INVENTION

The invention is a system and a method for protecting towed marine seismic equipment from shark bite. The following discussion of the invention will be illustrated in terms of towed seismic streamers, but this is not a limitation of the invention. Any form of seismic equipment that can and is towed through the water and is vulnerable to shark bite is considered appropriate for application of the present invention.

Sharks have highly developed sensory systems and a large area of the brain assigned to processing sensory information. It is believed that at longer distances (greater than 15 meters), sharks depend upon their highly sensitive smell receptors. It is further believed that at shorter distances (less than 15 meters), sharks depend upon their sight, which is adapted to use all available light in the dimly lit water. When close enough, sharks may take an exploratory bite to taste whether the potential target is nutritious enough to expend energy on killing. Sharks also have acute hearing, especially sensitive to low frequency vibrations. Sharks, as do all fish, have a lateral line that is sensitive to vibrations and subtle changes in water movement around them. Thus, shark repellents have included such efforts as chemical repellants, visual devices, underwater acoustic playback systems, and electrical shock emitters. However, the effectiveness of these methods has been limited.

Sharks, however, have an additional sensory organ, known as the ampullae of Lorenzini, which is a group of specialized sensory receptors that can pick up weak electric signals given off by all living organisms. A shark repellent that operates on the electrical sensitivity of this sensory system can be employed to protect towed marine seismic equipment from shark bite. This shark repellent comprises magnets, which appear to over stimulate the ampullae of Lorenzini found in sharks and other elasmobranches, causing the sharks to retreat.

Any type of high-strength magnet is appropriate for the invention. However, the magnet is preferably a permanent magnet. Magnets requiring a separate energy source, such as electromagnets, are not as convenient to employ on towed marine seismic equipment.

In one embodiment of the invention, the magnet is covered with a protective coating to attenuate corrosion when the magnet is placed in sea water. The protective coating can be made of any material that does not corrode significantly in sea water and does not block the magnet field of the magnet. Suitable coatings include, but are not limited to, metals such as nickel, plastics such as polymers, rubber, acrylic, enamel, and paint.

In a preferred embodiment of the invention, the towed marine seismic equipment comprises towed marine seismic streamers and the magnets are attached to the streamers by installing the magnets in the weight pockets in the streamers. The weight pockets are normally employed to hold weight blocks to control the buoyancy of the streamer and magnets of an appropriate size and configuration can be substituted for the weight blocks. However, this means of attaching the magnets is not a limitation of the invention. The magnets may be attached to the towed marine seismic equipment in any suitable fashion.

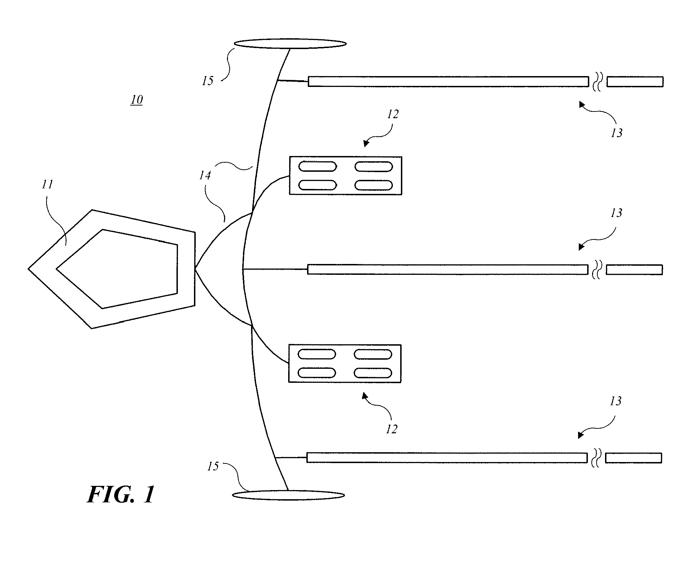

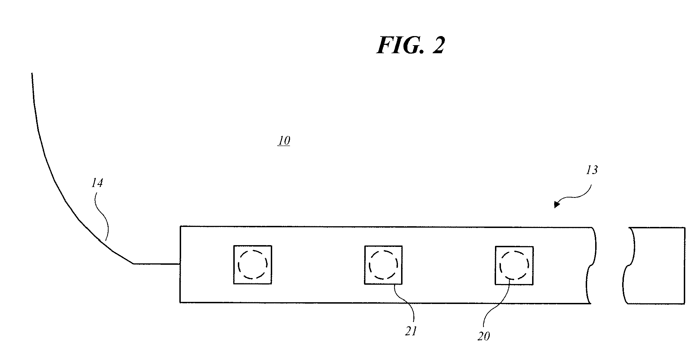

**FIGS. 1** and 2 show the typical types of towed marine seismic equipment that can be protected from shark bite by various embodiments of the apparatus and method of the invention. **FIG. 1** is a schematic plan view (not drawn to scale) of marine seismic survey equipment that could be used with towed streamers.

The towed marine seismic equipment is generally designated by reference numeral **10.** **FIG. 1** shows a seismic vessel **11** towing seismic sources **12** and seismic streamers **13.** Although two seismic sources **12** and three seismic streamers **13** are shown, this number is just for illustrative purposes only. Typically, there can be more seismic sources **12** and there can be many more seismic streamers **13,** but there could be fewer seismic sources or seismic streamers. The seismic sources **12** and the seismic streamers **13** are connected to the seismic vessel **11** by cables **14.** The cables **14** are typically further connected to devices such as deflectors **15** that spread apart the seismic streamers **13.** The seismic source (or sources) **12** may also be towed by a different vessel from the vessel that tows the seismic streamer (or streamers) **13.**

**FIG. 2** is a schematic side view (not drawn to scale) of a towed seismic streamer. In general, magnets **20** are attached to the towed marine seismic equipment **10** in any suitable manner. In one embodiment, the magnets **20** are attached to the seismic streamers **13** by installing the magnets **20** in weight pockets **21** in the seismic streamers **13.** The weight pockets **21** are typically located about every 12.5 meters along the length of the seismic streamer **13.** The weight pockets **21** are employed to hold weight blocks for adjusting the buoyancy of the seismic streamer **13,** typically, to maintain the seismic streamer **13** at approximately neutral buoyancy. The magnets **20** are substituted for the conventional weight blocks.

It should be understood that the preceding is merely a detailed description of specific embodiments of this invention and that numerous changes, modifications, and alternatives to the disclosed embodiments can be made in accordance with the disclosure here without departing from the scope of the invention. The preceding description, therefore, is not meant to limit the scope of the invention. Rather, the scope of the invention is to be determined only by the appended claims and their equivalents.

## Claims

1. A system for protecting towed marine seismic equipment from shark bite, comprising:
marine seismic equipment adapted for towing through a body of water; and
at least one magnet attached to the marine seismic equipment.

2. The system of claim 1, wherein the marine seismic equipment comprises towed marine seismic streamers.

3. The system of claim 2, wherein the at least one magnet is installed in weight pockets in the marine seismic streamers.

4. The system of any of the preceding claims, wherein the at least one magnet is a permanent magnet.

5. The system of any of the preceding claims, wherein the at least one magnet is covered with a protective coating to attenuate corrosion.

6. A method for protecting marine seismic equipment from shark bite, comprising:
towing marine seismic equipment having at least one magnet attached thereto.

7. The method of claim 6, wherein the marine seismic equipment comprises towed marine seismic streamers.

8. The method of claim 7, wherein the at least one magnet is installed in weight pockets in the marine seismic streamers.

9. The method of any of claims 6 to 8, wherein the at least one magnet is a permanent magnet.

10. The method of any of claims 6 to 9, wherein the at least one magnet is covered with a protective coating to attenuate corrosion.
